# FASCICULE DE BREVET EUROPEEN

(11) **EP 0 742 768 B1**
(45) Date de publication et mention de la délivrance du brevet: **13.08.1997**
(21) Numéro de dépôt: 95906383.5
(22) Date de dépôt: 10.01.1995
(51) Int. Cl.: B60T 13/567

(54) **SERVOMOTEUR D'ASSISTANCE DE FREINAGE, A SECURITE ACCRUE**
BREMSKRAFTVERSTÄRKER MIT ERHÖHTER SICHERHEIT
BRAKE SERVO HAVING IMPROVED SAFETY

(30) Priorité: 04.02.1994 FR 9401250
(43) Date de publication de la demande: 20.11.1996
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); GEBAUER, Maurice, F-93270 Sevran (FR)
(74) Mandataire: Bentz, Jean-Paul
(86) Numéro de dépôt international: FR9500029
(87) Numéro de publication internationale: WO9521083

(56) Documents cités:
- EP-A- 0 331 535
- EP-A- 0 524 033
- DE-A- 4 209 648

## Description

La présente invention concerne un servomoteur pneumatique d'assistance au freinage destiné aux véhicules à moteur, comprenant une enveloppe rigide séparée en au moins deux chambres au moyen d'une membrane souple, l'enveloppe étant composée d'au moins deux éléments et ce servomoteur comprenant au moins deux tirants reliant l'un à l'autre les deux éléments, suivant une direction axiale, pour exercer entre ces éléments une réaction en réponse à toute force qui tend à les écarter.

Des servomoteurs de ce type sont connus dans l'art antérieur, et un exemple en est donné dans le brevet EP-B-0 331 535.

L'invention présentée repose sur la mise en évidence du fait que les servomoteurs à tirants, bien qu'offrant l'avantage de montrer une rigidité très satisfaisante pour un poids relativement faible, présentent aussi l'inconvénient de pouvoir transmettre vers le conducteur des efforts très importants en cas de choc frontal accidentel du véhicule, et le but de l'invention consiste précisément à concilier les avantages et les inconvénients de ce type de servomoteurs.

A cette fin, le servomoteur de l'invention est essentiellement caractérisé en ce que l'un au moins des tirants est compressible suivant la direction axiale.

Par exemple, le tirant compressible comprend essentiellement au moins deux tubes enfilés l'un dans l'autre pour constituer un tirant télescopique.

Selon un autre mode de réalisation possible, le tirant compressible peut être essentiellement constitué par un câble flexible.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue en coupe partielle d'un servomoteur conforme à un premier mode de réalisation de l'invention;
- la figure 2 est une vue en coupe partielle d'un servomoteur conforme à une variante du premier mode de réalisation de l'invention; et
- la figure 3 est une vue en coupe partielle d'un servomoteur conforme à un second mode de réalisation possible de l'invention.

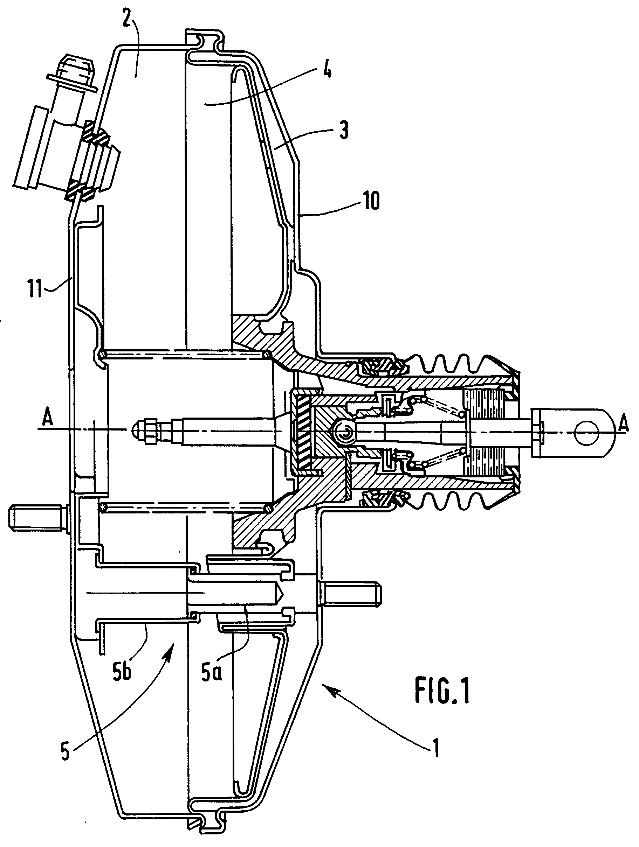

Comme le montre la figure 1, l'invention concerne un servomoteur pneumatique d'assistance au freinage, destiné aux véhicules à moteur et comprenant une enveloppe rigide 1 séparée en au moins deux chambres 2, 3 au moyen d'une membrane souple 4.

L'enveloppe est composée d'au moins deux éléments 10, 11 sertis l'un sur l'autre et reliés l'un à l'autre par au moins deux tirants, tels que 5, ces derniers étant orientés suivant une direction axiale A et prévus pour s'opposer à tout effort tendant, en fonctionnement, à écarter l'un de l'autre les éléments 10 et 11 de l'enveloppe.

Selon l'invention, l'un au moins des tirants est compressible suivant la direction axiale A, c'est-à-dire que ses deux extrémités peuvent aisément être rapprochées l'une de l'autre par un mouvement de l'une au moins suivant cette direction.

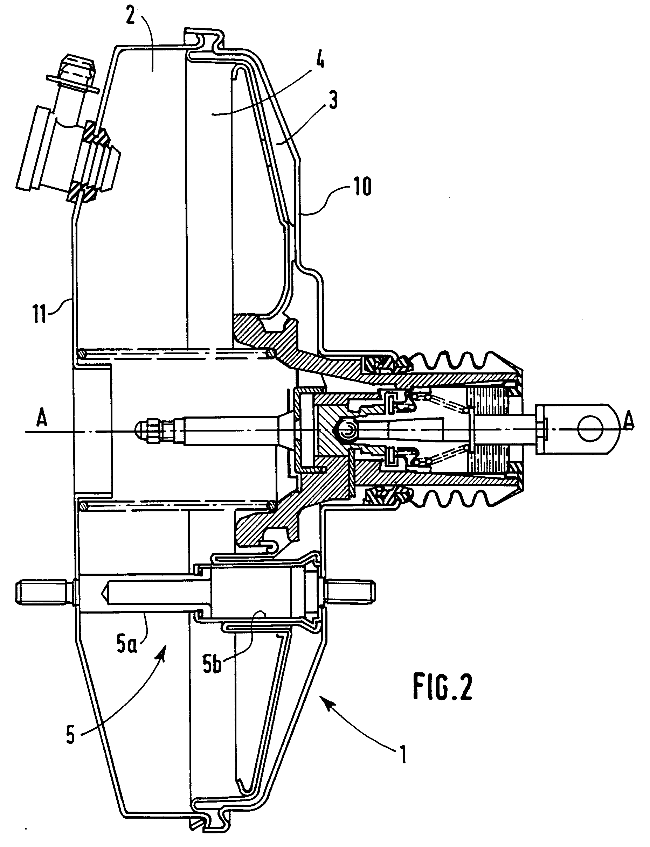

Comme le montrent les figures 1 et 2, chaque tirant compressible, tel que 5, peut prendre la forme d'un tirant télescopique et comprendre au moins deux tubes 5a, 5b enfilés l'un dans l'autre, le tube intérieur 5a étant susceptible, en cas de choc, de se rétracter en coulissant à l'intérieur du tube externe 5b.

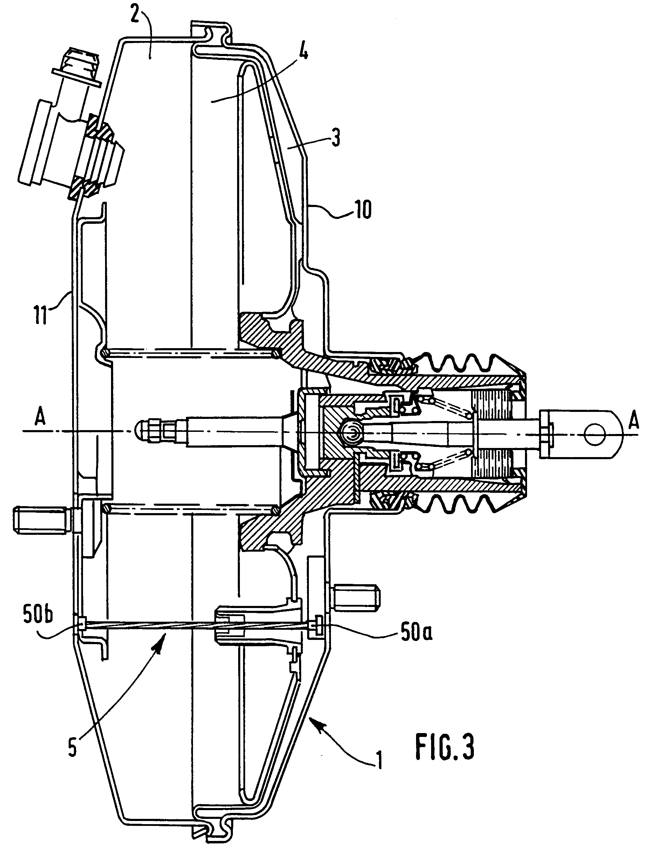

Cependant chaque tirant compressible peut aussi, comme le montre la figure 3, être constitué par un câble flexible serti à ses deux extrémités 50a, 50b sur les éléments 10 et 11 de l'enveloppe.

## Revendications

1. Servomoteur pneumatique d'assistance au freinage destiné aux véhicules à moteur, comprenant une enveloppe rigide (1) séparée en au moins deux chambres (2, 3) au moyen d'une membrane souple (4), l'enveloppe étant composée d'au moins deux éléments (10, 11) et ce servomoteur comprenant au moins deux tirants (5) reliant l'un à l'autre les deux éléments, suivant une direction axiale (A), pour exercer entre ces éléments une réaction en réponse à toute force qui tend à les écarter, caractérisé en ce que l'un au moins des tirants (5) est compressible suivant la direction axiale (A).

2. Servomoteur suivant la revendication 1, caractérisé en ce que le tirant compressible comprend essentiellement au moins deux tubes (5a, 5b) enfilés l'un dans l'autre pour constituer un tirant télescopique.

3. Servomoteur suivant la revendication 1, caractérisé en ce que le tirant compressible (5) est essentiellement constitué par un câble.

## Claims

1. Pneumatic servo for brake boosting intended for motor vehicles, comprising a rigid casing (1) divided into at least two chambers (2, 3) by means of a flexible membrane (4), the casing being composed of at least two elements (10, 11) and this servo comprising at least two tie rods (5) joining the two elements together in an axial direction (A), in order to exert, between these elements, a reaction in response to any force which tends to move them apart, characterized in that at least one of the tie rods (5) is compressible in the axial direction (A).

2. Servo according to Claim 1, characterized in that the compressible tie rod essentially comprises at least two tubes (5a, 5b) slipped into one another in order to constitute a telescopic tie rod.

3. Servo according to Claim 1, characterized in that the compressible tie rod (5) is essentially made up of a cable.

## Patentansprüche

1. Pneumatischer Bremsunterstützungs-Servomotor für Kraftfahrzeuge, mit einem starren Gehäuse (1), das mittels einer nachgiebigen Membran (4) in wenigstens zwei Kammern (2, 3) unterteilt ist, wobei das Gehäuse aus wenigstens zwei Elementen (10, 11) zusammengesetzt ist und der Servomotor wenigstens zwei Spannelemente (5) aufweist, welche die beiden Elemente entlang einer axialen Richtung (A) miteinander verbinden, um zwischen diesen Elementen in Abhängigkeit von allen Kräften, die sie auseinanderzubewegen versucht, eine Reaktionskraft auszuüben, dadurch gekennzeichnet, daß wenigstens eines der Spannelemente (5) entlang der axialen Richtung (A) zusammendrückbar ist.

2. Servomotor nach Anspruch 1, dadurch gekennzeichnet, daß das zusammendrückbare Spannelement im wesentlichen wenigstens zwei Rohre (5a, 5b) aufweist, die ineinandergesteckt sind, um ein teleskopisches Spannelement zu bilden.

3. Servomotor nach Anspruch 1, dadurch gekennzeichnet, daß das zusammendrückbare Spannelement (5) im wesentlichen durch ein Kabel gebildet ist.
